# EUROPÄISCHE PATENTSCHRIFT

(11) **EP 0 936 100 B1**
(45) Veröffentlichungstag und Bekanntmachung des Hinweises auf die Patenterteilung: **15.12.2010**
(21) Anmeldenummer: 99103267.3
(22) Anmeldetag: 05.02.1999
(51) Int. Cl.: B60L 5/19

(54) **Dachstromabnehmer für Schienenfahrzeuge mit Neigetechnik**
Roof mounted current collector for railway vehicles with tilting technology
Capteur de courant monté sur le toit de véhicules ferroviaires avec système d'inclinaison

(30) Priorität: 13.02.1998 DE 19805950
(43) Veröffentlichungstag der Anmeldung: 18.08.1999
(73) Patentinhaber: Bombardier Transportation (Bahntechnologie) Holding Germany GmbH, 10785 Berlin (DE)
(72) Erfinder: Schwiegel, Thomas Dipl.-Ing., 06108 Halle (DE); Worbs, Steffen Dipl.-Ing., 12489 Berlin (DE)
(74) Vertreter: Broydé, Marc

(56) Entgegenhaltungen:
- DE-A- 19 614 554
- DE-U- 29 613 541

## Beschreibung

Die Erfindung betrifft einen Dachstromabnehmer für Schienenfahrzeuge mit Neigetechnik nach dem Oberbegriff des Anspruchs 1.

In der DE 32 32 153 A1 wird ein Dachstromabnehmer beschrieben, der auf dem Wagendach in bogenförmigen Rollenführungen in seitliche Richtung relativ zum Dach beweglich angeordnet ist, wobei der Dachstromabnehmer gelenkig mit einer am Drehgestell befestigten Säule verbunden ist, welche den Dachstromabnehmer in einer bestimmten Lage im Verhältnis zum Drehgestell hält. Die Anordnung der aufwendigen mechanischen Verbindung zwischen Drehgestell und Dachstromabnehmer-Einrichtung, die eine Einengung des räumlichen Innenprofils mit sich bringt und massenaufwendig gestaltet ist, erweist sich bei dieser Bauausführung als nachteilig.
Weiterhin bekannt (Railway Gazette International, Mai 1980 Blatt XI) ist eine Dachstromabnehmer-Einrichtung, die ebenfalls mit einem Gestänge vom Laufwerk zum Dachstromabnehmer ausgestattet ist, bei welchem ein Kipphebelsystem zur Anwendung kommt, das eine Gegensteuerung des Dachstromabnehmers zur Wagenkastenneigung bewirkt. Bei dieser Ausführungsform ist die Einengung des räumlichen Innenprofils und weiterhin der beschränkte Einsatz nur für Schienenfahrzeuge ohne Wagenübergangseinrichtungen als nachteilig anzusehen. Diese bekannten Ausführungsformen sind mittels Seilzüge oder Gestänge mit Winkelhebel variabel gestaltbar. Nach der DE 22 43 405 ist eine direkte Steuerung für den Dachstromabnehmer mittels doppelt wirkenden Hydraulikzylinder-Antrieben bekannt, die zu beiden Seiten des Wagenkastens angeordnet sind. Die Kammem der einander gegenüberliegenden Zylinder sind wechselseitig über Kreuz miteinander verbunden und die Verbindungsleitungen an die Zylinder der Stellvorrichtung angeschlossen. Ein Nachteil bei dieser Ausführung ist die Abhängigkeit vom System der Wagenkastenfederung.
In der DE 196 03 077 C2 wird eine Neigeeinrichtung für einen Dachstromabnehmer beschrieben, welche aus einem zweiteiligen Rahmen besteht, wobei diese Teile des Rahmens über trapezförmige Zwischenstücke miteinander verbunden sind. Während der obere Rahmenteil die Isolatoren nebst dem Dachstromabnehmer trägt, greifen die Pendel, an dem die Schwenkeinrichtung aufgehängt ist, an die Lager des unteren Rahmenteils an. Diese Bauform verlangt einen entsprechenden Bauraum, der gegebenenfalls anderweitig benötigt wird, im Dachbereich des Wagenkastens, welcher im wesentlichen von der Länge der Pendel bestimmt wird. Weiterhin bekannt ist eine Ausführungsform eines Pendelwagens (Broschüre "Neues aus Japan; herausgegeben von der Japan. Botschaft in der Bundesrepublik Deutschland, Nr. 156, März 1970), dessen flexibler Dachstromabnehmer aus einem Pendelsystem besteht, bei dem die Pendel stehend auf dem Fahrzeugdach angeordnet sind. Die in sich labile Ausführung würde sich bei Ausfall der Steuerung nicht von allein in die Normallage bewegen. Weitere Dachstromabnehmer sind aus DE 196 14 554 A1 und aus DE 296 13 541 U1 bekannt. Der Erfindung liegt das Problem zugrunde, einen Dachstromabnehmer für Schienenfahrzeuge mit Neigetechnik zu konzipieren, dessen Querneigesystem durch eine Pendelführung bewegt wird und dabei bei hoher Quer- und Längsstabilität keinen Bauraum im Dachbereich des Schienenfahrzeuges beansprucht. Das Problem wird bei einem gattungsgemäßen Dachstromabnehmer für Schienenfahrzeuge mit Neigetechnik nach dem Oberbegriff des Anspruchs 1 durch die im kennzeichnenden Teil des Anspruchs 1 genannten Merkmale gelöst. Eine zweckmäßige Ausgestaltung der Erfindung ist in den Unteransprüchen angegeben. Die mit der Erfindung erzielten Vorteile bestehen insbesondere darin, daß der vorgeschlagene Dachstromabnehmer in eine kompakte Leichtbaukonstruktion eingefügt ist, die besonders stabil in Fahrtrichtung und leicht pendelnd quer zur Fahrtrichtung ausgebildet ist, wobei der zu bewegende Teil der Leichtbaukonstruktion selbst, um ein Verdrehen um seine senkrecht stehende Achse (schlingern) weitgehend zu verhindern, mit einer hohen Querstabilität ausgestattet ist. Diese konstruktiv stabile Ausführung, die auch für den Einsatz auf Fahrzeugen mit hohen Geschwindigkeiten geeignet ist, weist unabhängig von der Wagenkastenfederung einen einfachen, unkomplizierten und fehlerfrei funktionierenden Aufbau auf, aus dessen geringe Massen sich geringe Trägheiten ergeben, wobei das Innenprofil des Schienenfahrzeuges, insbesondere im Dachbereich, nicht eingeengt wird.

Ein Ausführungsbeispiel der Erfindung wird anhand der Zeichnungen näher erläutert. Die Zeichnungen zeigen in
- Fig. 1 -: eine schematische Darstellung einer Frontansicht des neigbaren Dachstromabnehmers mit Linearantrieb,
- Fig. 2 -: eine schematische Darstellung einer Frontansicht des neigbaren Dachstromabnehmers mit Drehantrieb,
- Fig. 3 -: eine schematische Darstellung einer Seitenansicht der Stelleinrichtung für Dachstromabnehmer mit einem biege- und torsionssteifen Stab,
- Fig. 4 -: eine schematische Darstellung einer Seitenansicht der Stelleinrichtung für Dachstromabnehmer, bei welchen zwei Pendel und der biege- und torsionssteife Stab aus einem Bauteil bestehen,

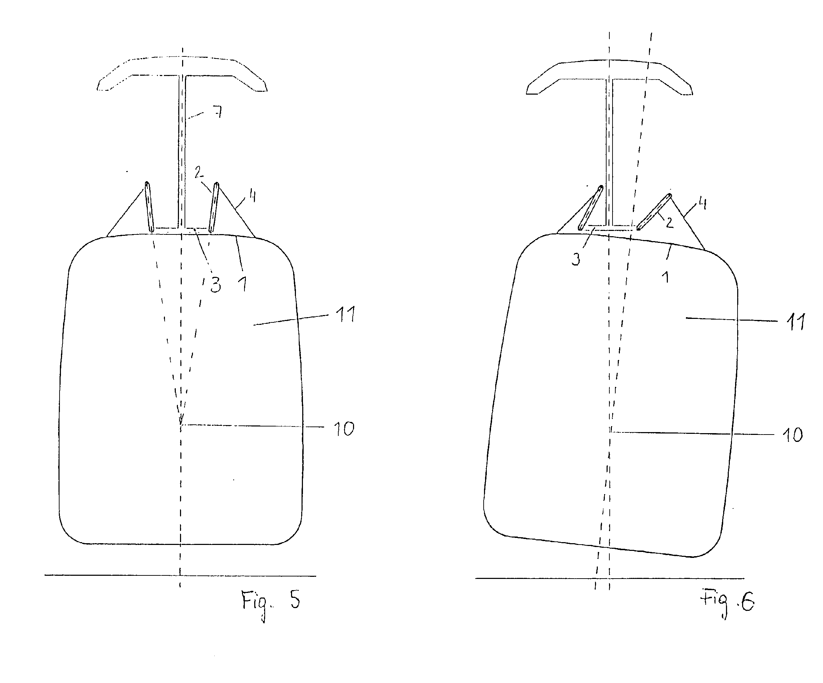

- Fig. 5 -: eine schematische Darstellung eines Schienenfahrzeuges mit Dachstromabnehmer in Normallage,
- Fig. 6 -: eine schematische Darstellung eines Schienenfahrzeuges mit Dachstromabnehmer in geneigter Kurvenlage.

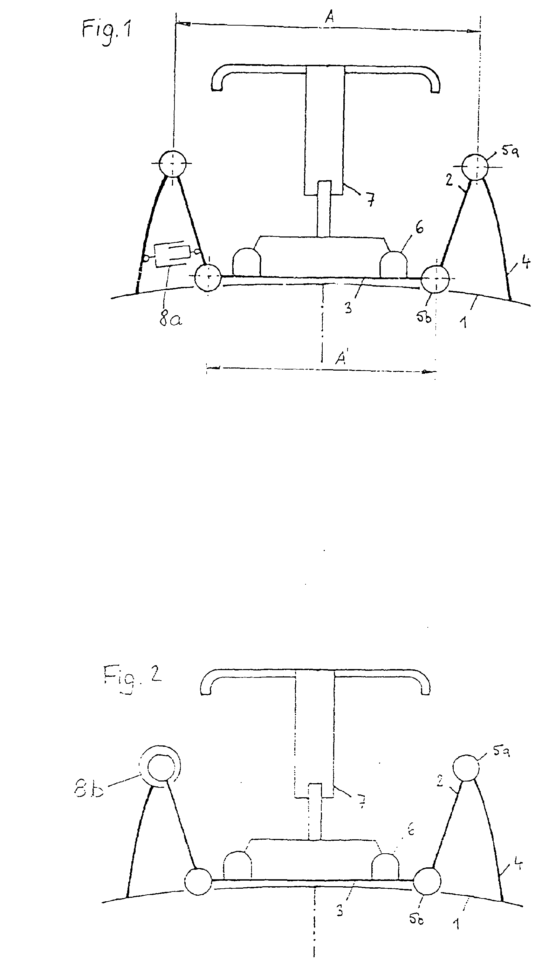

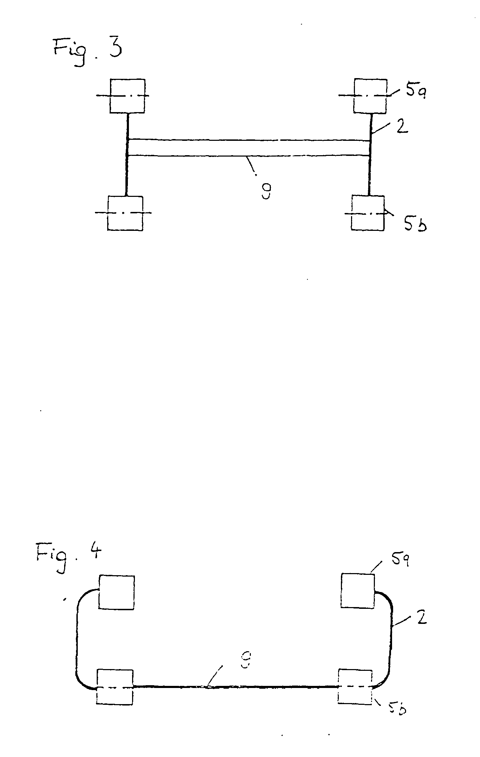

Gemäß den Figuren ist der Dachstromabnehmer 7 quer zur Längsachse des Fahrzeuges auf dessen Dach angeordnet. Ein im nichtdargestellten Dachgerippe integrierter Grundrahmen 1 weist Lagerböcke 4 auf, die sich über die Dachkontur erheben, und an die über obere Pendellager 5 a die Pendel 2 aufgehängt sind, an die wiederum mittels unterer Pendellager 5 b ein Rahmen 3 quer zur Fahrtrichtung gelenkig angelenkt ist. Auf diesem Rahmen sind Isolatoren 6 mit dem Dachstromabnehmer 7 aufgebaut. Von seiner Form her ist der Rahmen 3 in seiner Bauhöhe flach gehalten und eben ausgebildet und oberhalb der Dachkontur angeordnet. Bei diesem aufgezeigten Aufbau ist zu erkennen, daß die untere Befestigung der Isolatoren 6 und die unteren Pendellager 5 b beim Zusammenspiel der einzelnen Baugruppen sich annähernd in einer Ebene befinden. Der Grundrahmen 1 mit Rahmen 3 stellt eine komplette in Leichtbauweise ausgeführte Montagebaugruppe dar. die bei Bedarf auch zusammen mit dem Dachstromabnehmer 7 ausgewechselt werden kann. Um sowohl Längskräfte diagonal als auch Torsionskräfte zwischen vorderen und hinteren Pendeln 2 übertragen zu können und ein Verdrehen des Stromabnehmers 7 beim Ausschwenken um seine Vertikalachse zu vermeiden, sind die vorderen mit den hinteren Pendeln 2, zumindest einseitig, momentensteif miteinander verbunden. In Fahrtrichtung hintereinander liegende Pendel 2 sind wie in Fig. 3 und Fig. 4 dargestellt, miteinander mittels einer als biege- und torsionssteifer Stab ausgeführten Versteifung 9 verbunden, wobei in Fig. 4 eine Möglichkeit aufgezeigt wird, diesen biege- und torsionssteifen Stab und die Pendel 2 als ein Bauteil derart auszuführen, daß die als biege- und torsionssteifer Stab ausgeführte Versteifung 9 die Pendel 2 in Höhe der unteren Pendellager 5 b verbindet.
Die oberen Pendellager 5 a am Lagerbock 4 halten die oberen Enden der nebeneinander angeordneten Pendel 2 in einem Abstand A zueinander, während die unteren Enden der Pendel 2 im Bereich der unteren Pendellager 5 b einen Abstand A' aufweisen. Der Abstand A ist dabei in solch einem Verhältnis größer als der Abstand A', daß in Normallage des Wagenkastens 11 zum einen der Dachstromabnehmer 7 annähernd mittig am Fahrdraht angreift und zum anderen sich die gedachten Verlängerungen der Pendelachsen im Drehpol 10 des Wagenkastens 11 schneiden. Vorteilhaft können der Rahmen 3, die Pendel 2 und/oder die Lagerböcke 4 aus elektrisch nichtleitendem Material ausgeführt sein.
Im Rahmen der aerodynamisch günstigen energiesparenden Gestaltung des gesamten Schienenfahrzeuges sind Pendel 2 und die Lagerböcke 4 aerodynamisch günstig hintereinander angeordnet und/oder verfügen über eine in beide Fahrtrichtungen wirkende aerodynamisch günstige Außenkontur.
Zwischen Rahmen 3 und Grundrahmen 1 kann ein Antrieb überall dort angreifen, wo es eine Relativbewegung zum Wagenkasten 11 gibt. Durch die Schwerkraft des Stromabnehmers 7 und des Rahmens 3, die in Richtung Gleisbogeninnenseite wirkt, muß der Antrieb 8 a; 8 b einen Gegendruck erzeugen. Bei zunehmender Geschwindigkeit hingegen zieht dieselbe Masse, nämlich die des Dachstromabnehmers 7 und des Rahmens 3, infolge der wirkenden Fliehkraft zur Gleisbogenaußenseite hin, und der Antrieb 8 a; 8 b muß dieser Fliehkraft entgegenwirken. In Fig. 1 ist dieser Antrieb 8 a; 8 b. der aus dieser Masse des pendelnd aufgehängten Rahmens 3 nebst Dachstromabnehmer 7 resultierenden Schwer- bzw. Fliehkraft entgegenwirkt als Linearantrieb 8 a ausgeführt, der zwischen Lagerbock 4 und einem Pendel 2 angeordnet an diese wirkend angreift, während in Fig. 2 der Antrieb 8 a; 8 b als Drehantrieb 8 b in einem Pendellager 5 a (gegebenenfalls 5 b) integriert ist. Die Steuerung der Stellung des Rahmens 3 und damit des Dachstromabnehmers 7 zum Fahrdraht erfolgt, wie auch die Steuerung des Antriebes zur Synchronbewegung der Wagenkastenneigeeinrichtung über bekannte, hier nicht dargestellte und beschriebene, Systeme.
Bei Störfällen wird der Wagenkasten 11 automatisch in die Normallage verschwenkt, und demzufolge nimmt auch der Dachstromabnehmer 7 seine Normallage ein. Die aus der Neigebewegung resultierende vertikale Höhenabweichung kann vernachlässigt werden, da für den Dachstromabnehmer 7 von der unteren Abschaltlage bis zum Anliegen bei niedrigster Fahrdrahthöhe genügend Spielraum vorhanden ist.

## Patentansprüche

1. Dachstromabnehmer für Schienenfahrzeuge mit Neigetechnik, wobei der Dachstromabnehmer quer zur Längsachse des Fahrzeuges auf dem Dach des Schienenfahrzeuges derart angeordnet ist, dass in Fahrtrichtung hintereinander liegende vordere und hintere Pendel (2) mittels oberer Pendellager (5a) an Lagerböcken eines in einem Dachgerippe integrierten Grundrahmen aufgehängt und über untere Pendellager (5b) mit einem Rahmen (3), der die Isolatoren (6) mit dem Dachstromabnehmer (7) aufnimmt, quer zur Fahrtrichtung gelenkig verbunden sind, und die vorderen und hinteren Pendel (2) in Querrichtung jeweils einen Abstand A zwischen ihren oberen Pendellagern (5a) an den Lagerböcken und einen Abstand A' zwischen ihren unteren Pendellagern (5b) am Rahmen in einem Verhältnis von A> A' aufweisen, **dadurch gekennzeichnet, dass** der Rahmen (3) oberhalb der Dachkontur angeordnet und in seiner Bauhöhe flach gehalten und eben ausgebildet ist, wobei sich die unteren Pendellager (5 b) mit den unteren Anschlussflächen der Isolatoren (6) höhenmäßig in nahezu einer Ebene befinden und die in Fahrtrichtung hintereinander liegenden Pendel (2) durch eine als biege- und torsionsteifer Stab ausgeführte Versteifung (9) mindestens auf einer Seite des Dachstromabnehmers momentensteif miteinander verbunden sind.

2. Dachstromabnehmer nach Anspruch 1, **dadurch gekennzeichnet, dass** das Verhältnis A> A' der Abstände A und A' und damit die Schrägstellung der in Fahrtrichtung nebeneinander angeordneten Pendel (2) so ausgeführt ist, dass der gedachte Schnittpunkt der Längsachsen der Pendel (2) sich bei Normallage des Wagenkastens (11) in dessen Drehpol (10) befindet.

3. Dachstromabnehmer nach einem der Ansprüche 1 oder 2, **dadurch gekennzeichnet, dass** die gegenläufige Neigung des Dachstromabnehmers (7) relativ zum Wagenkasten (1) über einen Antrieb (8a oder 8b) erfolgt, welcher einerseits bei einer Ausführung als Linearantrieb (8 a) zwischen Rahmen (3) und Grundrahmen (1) angreift und andererseits bei einer Ausführung als Drehantrieb (8b) in einem Pendellager (5a oder 5b) integriert ist.

4. Dachstromabnehmer nach einem der Ansprüche 1 bis 3, **dadurch gekennzeichnet, dass** Rahmen (3), Pendel (2) und/oder Lagerböcke (4) aus elektrisch nichtleitendem Material ausgeführt sind.

5. Dachstromabnehmer nach einem der Ansprüche 1 bis 4, **dadurch gekennzeichnet, dass** die Pendel (2) und Lagerböcke (4) aerodynamisch günstig hintereinander angeordnet sind und/oder über eine aerodynamisch günstige Außenkontur verfügen.

6. Dachstromabnehmer nach einem der Ansprüche 1 bis 5, **dadurch gekennzeichnet, dass** die Versteifung (9) der in Fahrtrichtung hintereinander liegenden Pendel (2) als biege- und torsionsfesten Stab ausgeführt ist und gegebenenfalls gemeinsam mit den Pendeln (2) aus einem Bauteil bestehen.

## Claims

1. Pantograph for rail vehicles including tilt technology, wherein the pantograph is arranged on the roof of the rail vehicle transversally in relation to the longitudinal axis of the vehicle such that front and rear pendulums (2) located behind each other in the direction of travel are suspended by means of upper pendulum bearings (5a) on bearing blocks of a base frame incorporated in a roof framework and are articulated transversally in relation to the direction of travel by means of lower pendulum bearings (5b) to a frame (3) which receives the insulators (6) with the pantograph (7) and wherein the front and rear pendulums (2) respectively present in the transverse direction a distance A between their upper pendulum bearings (5a) on the bearing blocks and a distance A' between their lower pendulum bearings (5b) on the frame with a ratio of A> A', **characterised in that** the frame (3) is arranged above the roof contour and is designed maintained low in overall height and flat, wherein the lower pendulum bearings (5b) are almost on the same plane in terms of height with the bottom joint planes of the insulators (6) and the pendulums (2) located behind each other in the direction of travel are connected to each other rigidly in terms of moments at least on one side of the pantograph by a brace (9) executed as a flexurally stiff and torsionally rigid rod.

2. Pantograph according to claim 1, **characterised in that** the ratio A> A' of the distances A and A' and therefore the inclined position of the pendulums (2) arranged adjacent to each other is executed such that the imaginary point of intersection of the longitudinal axes of the pendulums (2) is located, in the normal position of the carriage body (11), in the latter's centre of rotation (10).

3. Pantograph according to either of claims 1 or 2, **characterised in that** the opposed inclination of the pantograph (7) in relation to the carriage body (1) is performed through a drive (8a or 8b), which on the one hand engages in the case of an embodiment as a linear drive (8a) between the frame (3) and the base frame (1) and on the other hand, in the case of an embodiment as a rotary drive (8b) is incorporated in a pendulum bearing (5a or 5b).

4. Pantograph according to any of claims 1 to 3, **characterised in that** the frame (3), pendulums (2) and/or bearing blocks (4) are executed in electrically nonconductive material.

5. Pantograph according to any of claims 1 to 4, **characterised in that** the pendulums (2) and bearing blocks (4) are arranged in an aerodynamically advantageous manner behind each other and/or possess an aerodynamically advantageous outer shape.

6. Pantograph according to any of claims 1 to 5, **characterised in that** the brace (9) of the pendulums (2) located behind each other in the direction of travel is executed as a flexurally stiff and torsionally rigid rod and if appropriate, consists of a single component with the pendulums (2).

## Revendications

1. Collecteur de courant de toit pour des véhicules sur rails utilisant la technique de pendulation, le collecteur étant agencé transversalement à l'axe longitudinal du véhicule sur le toit du véhicule sur rails de telle manière que des pendules avant et arrière (2) se trouvant l'un derrière l'autre dans le sens de la marche soient suspendus transversalement au sens de la marche au moyen de paliers à rotule supérieurs (5a) à des supports de palier d'un cadre de base intégré dans une ossature de toit et soient articulés par l'intermédiaire des paliers à rotule inférieurs (5b) avec un cadre (3) qui reçoit les isolateurs (6) avec le collecteur (7), et les pendules avant et arrière (2) présentant chacun dans le sens transversal une distance A entre leurs paliers à rotule supérieurs (5a) sur les supports de palier et une distance A' entre leurs paliers à rotule inférieurs (5b) sur le cadre dans une relation de A > A', **caractérisé en ce que** le cadre (3) est disposé au-dessus du profil de toit et maintenu plat dans son encombrement en hauteur et **en ce qu'**il est formé de manière plane, les paliers à rotule inférieurs (5b) étant situés avec les surfaces de raccordement inférieures des isolateurs (6) presque dans un plan par rapport à la hauteur et les pendules se trouvant les uns derrière les autres (2) dans le sens de la marche étant reliés les uns aux autres de façon rigide en rotation au moins sur une face du collecteur par l'intermédiaire d'un renforcement (9) réalisé sous la forme d'une barre rigide en flexion et en torsion.

2. Collecteur de courant de toit selon la revendication 1, **caractérisé en ce que** la relation A > A' des distances A et A' et donc l'inclinaison des pendules (2) agencés côte à côte dans le sens de la marche est réalisée de telle sorte que l'intersection imaginaire des axes longitudinaux des pendules (2) se trouve au centre de rotation (10) de la caisse du véhicule (11) lorsque cette dernière est dans sa position normale.

3. Collecteur de courant de toit selon l'une quelconque des revendications 1 ou 2, **caractérisé en ce que** l'inclinaison en sens opposé du collecteur (7) par rapport à la caisse du véhicule (1) s'effectue par un actionneur (8a ou 8b) qui, lorsqu'il est réalisé sous la forme d'un actionneur linéaire est, d'une part, appliqué entre le cadre (3) et le cadre de base (1) et lorsqu'il est réalisé sous la forme d'un actionneur rotatif (8b) est, d'autre part, intégré dans un palier à rotule (5a ou 5b).

4. Collecteur de courant de toit selon l'une quelconque des revendications 1 à 3, **caractérisé en ce que** les cadres (3), les pendules (2), et/ou les supports de palier (4) sont réalisés dans un matériau électriquement non conducteur.

5. Collecteur de courant de toit selon l'une quelconque des revendications 1 à 4, **caractérisé en ce que** les pendules (2) et les supports de palier (4) sont agencés les uns derrière les autres de façon aérodynamiquement favorable et/ou disposent d'un profil extérieur aérodynamiquement favorable.

6. Collecteur de courant de toit selon l'une quelconque des revendications 1 à 4, **caractérisé en ce que** le renforcement (9) des pendules (2) se trouvant les uns derrière les autres dans le sens de la marche est réalisé sous la forme d'une barre résistant à la flexion et à la torsion et comporte éventuellement un composant en commun avec les pendules (2).
